Europäisches Patentamt

**European Patent Office**

**Office européen des brevets**

(19)

(11) Publication number: **0 264 372**
**B1**

# EUROPEAN PATENT SPECIFICATION

(12)

(45) Date of publication of the patent specification:
**13.09.89**

(21) Application number: **86903734.1**

(22) Date of filing: **29.04.86**

(86) International application number:
**PCT/US 86/00905**

(87) International publication number:
**WO 87/06436 (05.11.87 Gazette 87/24)**

(51) Int. Cl.⁴: **A 41 D  19/00,** B 05 D  1/36,
B 32 B  9/04

(54) **PARTIALLY DETACKIFIED LEATHER AND GLOVE.**

(43) Date of publication of application:
**27.04.88 Bulletin 88/17**

(45) Publication of the grant of the patent:
**13.09.89 Bulletin 89/37**

(84) Designated Contracting States:
**AT BE CH DE FR GB IT LI LU NL SE**

(56) References cited:
**GB-A-1 409 327**
**US-A-3 649 967**
**US-A-4 131 709**
**US-A-4 270 228**
**US-A-4 346 890**
**US-A-4 497 072**
**US-A-4 515 851**
**US-A-4 598 429**

(73) Proprietor: **R. NEUMANN & CO., 300 Observer Highway, Hoboken, NJ o7030 (US)**

(72) Inventor: **MULVANEY, Lewis, W., 7 Chestnut Place, Ho- Ho- Kus, NJ 07030 (US)**

(74) Representative: **Wilkinson, Stephen John, c/o Stevens, Hewlett & Perkins 5 Quality Court Chancery Lane, London WC2A 1HZ (GB)**

## Description

This invention relates to a method for the production of leather permanently tackified on one side and detackified on the other (non-tackified back, herein designated NTB) and a sport or work glove made from said leather.

Such glove is more comfortable to wear than a glove tackified on both sides.

## Background and Prior Art

It is generally known to provide tackified gloves for applications where improved gripping security is important, e.g. golf, racquetball, tennis, squash, soccer, football, baseball, etc.

In order to accomplish this, various coatings such as polyurethanes and latices have been employed. Moreover, in German Offenlegungsschrift 2 840 197, it was suggested to coat a sticky material onto the surface of the glove, preferably by the use of an adhesive spray.

However, none of these known approaches are entirely satisfactory. Urethanes and latices lack the requisite tack or coefficient of friction and do not possess the "feel" of leather. Moreover, adhesive coatings of the spray-on type tend to lack permanence and also deteriorate the leather.

Still further, in Applicant's copending application, Serial No. 443 655, filed November 22, 1982, various hydrocarbon resin-impregnated tackified coatings are described.

In the Applicant's previous approach to tackifying leather, both sides of the leather were tackified. In a glove, this is disadvantageous because of the discomfort in having a tacky inner surface in contact with the hand of the wearer.

While the above-described German reference does not have this problem because the tackified coating is sprayed on the surface of the leather, it also does not have the desired permanence that is imparted to the glove when it is tackified by impregnation in a solution of a tackifying resin.

## Objectives and Brief Summary of the Invention

Accordingly, it is an object of the present invention to provide a glove which is permanently tackified by impregnation in order to obtain the desired permanence of the coating but which, has a non-tacky inner surface with the "feel" of leather.

It is a further objective of this invention to provide a process for producing such glove.

It is a still further objective of the present invention to provide a leather permanently tackified by impregnation, with the outer or grain side tackified and the inner or flesh side is detackified.

These and other objectives are realized by the present invention wherein both sides of the leather are impregnated with a solution containing an isobutylene-butene copolymer produced by polymerization of normal and branched chain butenes and a hydrocarbon tackifying resin, to impart the desired degree of tack to the leather. Then the inner or flesh side of the leather is coated with a solution containing, a silicone resin and a nitrocellulose binder to provide a detackified surface having the desired degree of adhesion to and compatability with the already tackified leather.

The nitrocellulose, by itself, will provide a barrier between the user's hand and the tackified surface, however, the feel of the dried nitrocellulose is rather hard and not leather-like. On the other hand, the silicone resin without the nitrocellulose will not provide the desired degree of adhesion to the substrate. By combining these two materials, it is possible to obtain the desired non-tacky inner surface having suitable adhesion, yet retaining the "feel" of the leather.

If an excess of silicone is employed, a glove will feel uncomfortably slippery and if too little is used, the hard un-leather-like feel of the nitrocellulose will be apparent.

By employing the correct amount of silicone in combination with the nitrocellulose it becomes possible to obtain a comfortable, dry yet non-tacky sensation.

## Brief Description of the Drawings

Figure 1 depicts a top view of the palm of a glove in accordance with the present invention.

Figure 2 depicts a side view of the glove of Figure 1.

## Detailed Description

The process of this invention is applicable to a wide variety of leathers such as calfskin, cowhide, cabretta and pigskin. The leather must be in the crust condition before treatment, that is, it must be unfilled and unfinished and should preferably be chrome tanned.

With respect to the tackifying composition, any of a wide variety of hydrocarbon-type tackifying resins may be employed. For example, there may be mentioned aromatic hydrocarbon resins and aliphatic hydrocarbon resins.

A particularly preferred tackifying resin is a polymerized hydrocarbon resin of the Piccopale type, such as Piccolyte S 70, available from Pennsylvania Industrial Chemicals Corporation, Clairton, PA 15025.

In combination with the hydrocarbon resin, there is employed a synthetic hydrocarbon polymer such as an isobutylene-butene copolymer. An example of such copolymer is Poly S 2000, obtainable from S and S Chemical Company, 445 Northern Boulevard, Great Neck, New York 11021 (high molecular weight mono-olefin content 95 - 100 %, the balance being isoparaffins).

The organic solvent for the tackifying solution may be VM&P naphtha, heptane or any other nonpolar, conventional organic solvent.

In preparing the tackifying solution, the isobutylenebutene copolymer and hydrocarbon resin are desirably mixed and dissolved separately with a portion of the organic solvent and then are mixed together with more of the solvent to the desired specific gravity.

While a wide variety of ratios of isobutylene-butene copolymer to hydrocarbon resin may be employed, it has been found that about 10 : 1 - 1 : 10 parts of hydrocarbon resin per 1 part of the copolymer is usable. A ratio of 1 part of hydrocarbon resin to 10 parts of copolymer is preferred.

The resultant tackifying solution desirably has a specific gravity of about 0.770 at 22°C.

Impregnation is effected by immersion of the leather in the tackifying solution for about 1 to 2 minutes and then hanging the leather at room temperature under slow-moving air fans until the leather is dry.

In order to detackify the flesh side of the leather, a formulation was discovered which provides the desired non-tacky surface but yet also provides suitable adhesion to the substrate and the "feel" of leather.

Silicone resins do not readily adhere to leather already possessing a tackified surface. However, the co-presence of the nitrocellulose binder mixed with silicone provides satisfactory adhesion of the silicone to the already tackified fibers.

The ratio of silicone resin to nitrocellulose resin can vary widely, e.g. 1 : 30 to 1 : 10 but is preferably about 1 : 17.

The application of the detackifying composition can either be by spraying or by other conventional coating methods, followed by drying to remove the solvent.

The amount of detackifying agent applied can vary widely depending on the amount of detackifying effect desired.

A recommended amount would increase the weight of the leather by 5 to 7 %.

The following is an example of one manner in which the invention may be practiced:

## Example

### A. Tackifying procedure

A sheet of calfskin leather was permanently tackified on both sides by impregnation in a VM&P naptha solution containing 1 part by weight Piccolyte S 70 hydrocarbon tackifying resin to 10 parts by weight Poly S 2000 isobutylene-butene copolymer.

The leather was dried to provide a permanently tackified surface on both sides thereof.

### B. Detackifying procedure for N.T.B.

The sheet of the above tackified leather was treated on the flesh side with the following solution:

52 % by weight of Hydrholac SD-270 nitrocellulose lacquer emulsion from Rohm and Hass Company, Philadelphia, PA 19105 and

3 % by weight Silicone Resin LS-3399. This is a xylene solution of silicone resin from Rohm and Hass Company, Philadelphia, PA 19105.

The solvent for the above additives is thinner LS-3082 at 45 % by weight. This is blend of n-propylacetate, methylethyl ketone and toluene, also from Rohm and Hass Company.

After the nitrocellulose and silicone additives were dissolved in the solvent, the solution was sprayed on the flesh side of the leather and the resultant leather was dried.

The leather possessed a tackified outer (grain) surface and yet a smooth, fairly natural glove to hand "feel" on the inner (flesh) side.

The leather was cut and sewn together to provide a glove permanently tackified on the outside and comfortably detackified on the inside.

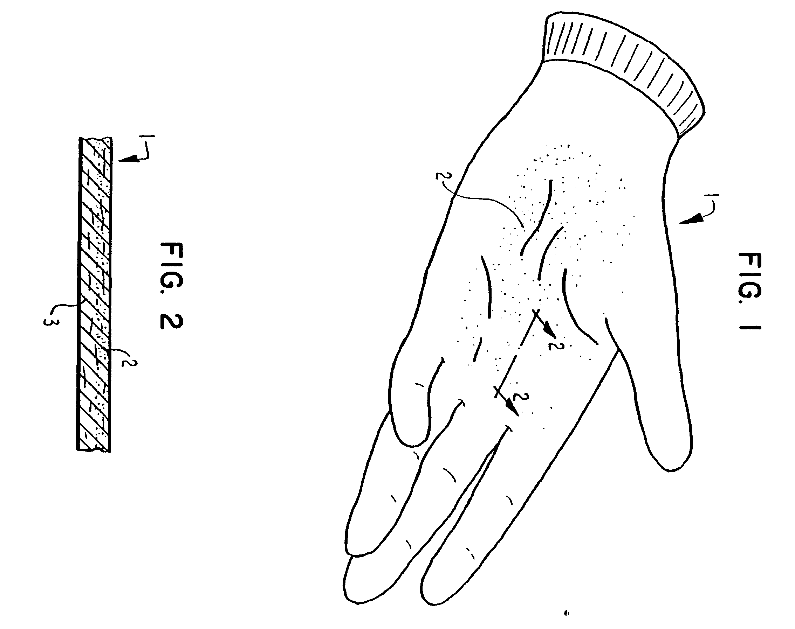

With reference to Figures 1 and 2, in making the tackified glove 1, it is preferred that the tackified N.T.B. leather be generally used only on the palm side of the glove, including the palm side of the fingers and at times the whole of the thumb, forefinger, and small finger of the glove. The tackified side of the leather 2 faces out, the N.T.B. (non-tackified area) 3 being against the palm and fingers of the hand. Other parts of the glove (the back) can be made of completely untackified glove leather or other conventional glove materials.

Modifications of the foregoing which are within the spirit and scope of the invention will be readily apparent to those of ordinary skill in the art.

## Claims

1. A tackified glove having an inner and outer surface at least a portion of said outer surface being tackified and at least a portion of said inner surface being detackified,

said glove being produced by a process which comprises the steps of:

a. immersing leather in an organic solvent solution containing a hydrocarbon tackifying resin and an isobutylene-butene copolymer to impregnate the leather on both sides with said solution,

b. evaporating the solvent from said impregnated leather sheet to thereby tackify both sides of said leather,

c. detackifying at least a portion of the inner or flesh side of said leather by applying thereto an organic solvent solution containing nitrocellulose and a silicone resin,

d. evaporating the solvent from the leather of step c.

and

e. sewing the leather into a glove, wherein the outer side is tackified and the inner side is detackified, but yet retains the feel of leather.

2. The tackified glove according to claim 1 wherein the ratio of said isobutylene-butene copolymer to said hydrocarbon tackifying resin is about to 10 : 1.

3. A process for treating leather which comprises:

a. immersing said leather into an organic solvent solution containing an isobutylene-butene copolymer and a hydrocarbon tackifying resin, to impregnate the leather with said solution,

b. evaporating the solvent from said impregnated leather to thereby tackify both sides of said leather,

c. detackifying at least a portion of the inner or flesh side of said leather by applying thereto an organic solvent solution containing nitrocellulose and silicone resin, and

d. evaporating the solvent from the leather of step c.

4. The leather produced by the process of claim 3.

5. A process for producing a glove which has the outer surface thereof tackified and the inner surface thereof detackified which comprises the steps of:

a. immersing leather in a solution containing an isobutylene-butene copolymer and a hydrocarbon tackifying resin, in an organic solvent, to impregnate the leather with said solution,

b. evaporating the solvent from said impregnated leather sheet to thereby tackify both sides of said leather,

c. detackifying at least a portion of the inner side of said leather by applying thereto an organic solvent solution containing nitrocellulose and a silicone resin, in an organic solvent,

d. evaporating the solvent from the leather of step c.

and

e. sewing the leather into a glove, wherein the outer side is tackified and the inner side is detackified but yet retains the feel of leather.

6. The tackified glove according to claim 2 wherein the nitrocellulose, silicone and solvent are present at about 52 %, 3 % and 45 % by weight, respectively, in said solution.

7. A adhesively tackified leather glove having an inner and an outer surface, wherein at least a portion of each of said inner and outer surfaces is adhesively tackified and wherein at least a portion of said adhesively tackified inner surface is detackified, said detackified inner surface retaining the feel of leather.

8. The tackified glove according to claim 7 wherein the leather is adhesively tackified therethrough.

## Revendications

1. Gant rendu collant présentant une surface intérieure et une surface extérieure, au moins une partie de ladite surface extérieure étant rendue collante, et le caractère collant ayant été supprimé sur au moins une partie de ladite surface intérieure,

ledit gant étant obtenu par un procédé qui comprend les étapes consistant à:

a) immerger le cuir dans une solution contenant dans un solvant organique, une résine tackifiante hydrocarbonée et un copolymère isobutylène-butène, afin que le cuir s'imprègne des deux côtés de ladite solution;

b) faire s'évaporer le solvant de ladite feuille de cuir imprégnée, pour rendre ainsi collants les deux côtés dudit cuir;

c) supprimer le caractère collant d'au moins une partie du côté intérieur ou côté chair dudit cuir en y appliquant une solution contenant, dans un solvant organique, de la nitrocellulose et une résine de silicone;

d) faire s'évaporer le solvant du cuir de l'étape c); et

e) coudre le cuir pour former un gant, dont le côté extérieur est rendu collant et le côté intérieur est dépourvu de caractère collant, mais conserve néanmoins le toucher du cuir.

2. Gant rendu collant selon la revendication 1, dans lequel le rapport dudit copolymère isobutylène-butène à ladite résine tackifiante hydrocarbonée est d'environ 10 : 1.

3. Procédé de traitement du cuir qui comprend les étapes consistant à:

a) immerger ledit cuir dans une solution contenant, dans un solvant organique, un copolymère isobutylène-butène et une résine tackifiante hydrocarbonée, afin que le cuir s'imprègne de ladite solution;

b) faire s'évaporer le solvant dudit cuir imprégné, pour rendre ainsi collants les deux côtés dudit cuir;

c) supprimer le caractère collant d'au moins une partie du côté intérieur ou côté chair dudit cuir en y appliquant une solution contenant, dans un solvant organique, de la nitrocellulose et de la résine de silicone;

d) faire s'évaporer le solvant du cuir de l'étape c).

4. Cuir obtenu par le procédé de la revendication 3.

5. Procédé de fabrication d'un gant dont la surface extérieure a été rendue collante et le caractère collant de la surface intérieure a été supprimé, ce procédé comprenant les étapes consistant à:

a) immerger le cuir dans une solution contenant dans un solvant organique un copolymère isobutylène-butène et une résine tackifiante hydrocarbonée, afin que le cuir s'imprègne des deux côtés de ladite solution;

b) faire s'évaporer le solvant de ladite feuille de cuir imprégnée, pour rendre ainsi collants les deux côtés dudit cuir;

c) supprimer le caractère collant d'au moins une partie du côté intérieur dudit cuir en y appliquant une solution contenant, dans un solvant organique, de la nitrocellulose et une résine de silicone;

d) faire s'évaporer le solvant du cuir de l'étape c); et

e) coudre le cuir pour former un gant, dont le côté extérieur est rendu collant et le côté intérieur est dépourvu de caractère collant, mais conserve néanmoins le toucher du cuir.

6. Gant rendu collant selon la revendication 2, dans lequel la nitrocellulose, la silicone et le solvant sont présents à raison respectivement d'environ 52 %, 3 % et 45 % en poids, dans la solution.

7. Gant en cuir rendu collant de manière adhésive, présentant une surface intérieure et une surface extérieure, dans lequel au moins une partie de chacune desdites surfaces intérieure et extérieure est rendue collante de manière adhésive, et dans lequel le caractère collant d'au moins une partie de ladite surface intérieure rendue collante de manière adhésive est supprimé, ladite surface intérieure dont le caractère collant a été supprimé conservant le toucher du cuir.

8. Gant rendu collant selon la revendication 7, dans lequel le cuir est rendu totalement collant de manière adhésive.


**Patentansprüche**

1. Klebrig gemachter Handschuh mit einer Innen- und einer Außenfläche, wobei wenigstens ein Teil der äußeren Fläche klebrig gemacht ist und wenigstens ein Teil der Innenfläche nichtklebrig ist und der Handschuh nach einem Verfahren hergestellt wird, der folgende Schritte umfaßt:

a) Eintauchen eines Leders in eine organische Lösungsmittellösung mit einem klebrigmachenden Kohlenwasserstoffharz und einem Isobutylenbutencopolymer zum Imprägnieren des Leders mit dieser Lösung auf beiden Seiten,

b) Verdampfen des Lösungsmittels von der imprägnierten Lederbahn, um so beide Seiten des Leders klebrig zu machen,

c) Entfernen der Klebrigkeit von wenigstens einem Teil der inneren oder Fleischseite des Leders durch Aufbringen einer organischen Lösungsmitelösung, die Nitrozellulose und eine Siliziumharz enthält,

d) Verdampfen des Lösungsmittels vom Leder der Stufe (c) und

e) Vernähen des Leders in einen Handschuh, bei dem die äußere Seite klebrig gemacht und die innere Seite nichtklebrig ist, trotzdem jedoch den Ledergriff beibehält.

2. Klebrig gemachter Handschuh gemäß Anspruch 1 bei dem das Verhältnis des Isobutylenbutencopolymers zum klebrigmachenden Kohlenwasserstoffharz etwa 10 : 1 beträgt.

3. Verfahren zur Behandlung von Leder, das folgendes umfaßt:

a) Eintauchen von Leder in eine organische Lösungsmittellösung, die ein Isobutylenbutencopolymer und ein klebrigmachendes Kohlenwasserstoffharz enthält, um das Leder mit dieser Lösung zu imprägnieren,

b) Verdampfen des Lösungsmittels vom imprägnierten Leder, um so beide Seiten des Leders klebrig zu machen,

c) Entfernen der Klebrigkeit von wenigstens einem Teil der inneren oder Fleischseite des Leders durch Aufbringen einer organischen Lösungsmittellösung, die Nitrozellulose und Siliziumharz enthält, und

d) Verdampfen des Lösungsmittels vom Leder gemäß Stufe (c).

4. Leder, das nach dem Verfahren des Anspruches 3 hergestellt ist.

5. Verfahren zur Herstellung eines Handschuhes, der eine äußere klebrig gemachte Oberfläche und eine nichtklebrige Innenfläche aufweist, das folgende Stufen aufweist:

a) Eintauchen von Leder in eine Lösung, die ein Isobutylenbutencopolymer und ein klebrigmachendes Kohlenwasserstoffharz in einem organischen Lösungsmittel enthält, um das Leder mit dieser Lösung zu imprägnieren,

b) Verdampfen des Lösungsmittels von dieser imprägnierten Lederbahn, um dadurch beide Seiten des Leders klebrig zu machen,

c) Entfernen der Klebrigkeit von wenigstens einem Teil der Innenseite des Leders, indem eine organische Lösungsmittellösung aufgebracht wird, die Nitrozellullose und ein Siliziumharz in einem organischen Lösungsmittel enthält,

d) Verdampfen des Lösungsmittels vom Leder gemäß Stufe (c), und

e) Vernähen des Leders zu einem Handschuh, bei dem die äußere Seite klebrig gemacht ist und von der Innenseite die Klebrigkeit entfernt ist, jedoch den Griff vom Leder beibehält.

6. Klebrig gemachter Handschuh gemäß Anspruch 2, bei dem die Nitrozellulose, das Silizium und das Lösungsmittel in ungefähr 52 Gew.-%, 3 Gew.-% bzw. 45 Gew.-% in dieser Lösung vorhanden sind.

7. Haftender, klebrig gemachter Lederhandschuh mit einer Innen- und einer Außenfläche, bei dem wenigstens ein Teil der Innen- und Außenfläche haftend klebrig gemacht ist und bei dem wenigstens ein Teil der haftend klebrig gemachten Innenfläche von der Klebrigkeit befreit wird, wobei die von der Klebrigkeit befreite Innenfläche den Ledergriff beibehält.

8. Klebrig gemachter Handschuh gemäß Anspruch 7, bei dem das Leder durchgehend haftend klebrig gemacht ist.

# FIG. 1

# FIG. 2